(19) **Europäisches Patentamt / European Patent Office / Office européen des brevets**

(11) **EP 2 309 489 B1**

(12) **EUROPEAN PATENT SPECIFICATION**

(45) Date of publication and mention of the grant of the patent:
**21.11.2018 Bulletin 2018/47**

(51) Int Cl.:
***G10L 15/22*** *(2006.01)*   ***G10L 15/06*** *(2013.01)*

(21) Application number: **10179864.3**

(22) Date of filing: **02.02.2006**

(54) **Methods and systems for considering information about an expected response when performing speech recognition**

Verfahren und System zur Berücksichtigung von Informationen über eine erwartete Antwort bei der Durchführung von Spracherkennung

Procédés et systèmes permettant de prendre en consideration des informations relatives à une réponse attendue lors de la mise en oeuvre de la reconnaissance vocale

(84) Designated Contracting States:
**AT BE BG CH CY CZ DE DK EE ES FI FR GB GR HU IE IS IT LI LT LU LV MC NL PL PT RO SE SI SK TR**

(30) Priority: **13.01.2006 US 331649**
**04.02.2005 US 51825**

(43) Date of publication of application:
**13.04.2011 Bulletin 2011/15**

(62) Document number(s) of the earlier application(s) in accordance with Art. 76 EPC:
**06734403.6 / 1 851 758**

(73) Proprietor: **Vocollect, Inc.**
**Pittsburgh,**
**Pennsylvania 15235 (US)**

(72) Inventors:
• **Pike, Jeffrey**
  **Murrysville, PA 15668 (US)**
• **El-Jaroudi, Amro**
  **Pittsburgh, PA 15220 (US)**
• **Braho, Keith**
  **Murrysville, PA 15668 (US)**

(74) Representative: **Houghton, Mark Phillip et al**
**Patent Outsourcing Limited**
**1 King Street**
**Bakewell, Derbyshire DE45 1DZ (GB)**

(56) References cited:
**EP-A1- 1 377 000     WO-A1-96/27872**
**WO-A2-96/13030     US-A- 4 783 803**

**Description**

## TECHNICAL FIELD

The present invention relates to speech recognition and, more particularly, to speech recognition systems for addressing likely or expected responses and to improving the speed and accuracy of speech recognition systems when one or more expected responses are likely.

## BACKGROUND ART

Speech recognition has simplified many tasks in the workplace by permitting hands-free communication with a computer as a convenient alternative to communication via conventional peripheral input/output devices. A worker may enter data by voice using a speech recognizer and commands or instructions may be communicated to the worker by a speech synthesizer. Speech recognition finds particular application in mobile computing devices in which interaction with the computer by conventional peripheral input/output devices is restricted.

For example, wireless wearable terminals can provide a worker performing work-related tasks with desirable computing and data-processing functions while offering the worker enhanced mobility within the workplace. One particular area in which workers rely heavily on such wireless wearable terminals is inventory management. Inventory-driven industries rely on computerized inventory management systems for performing various diverse tasks, such as food and retail product distribution, manufacturing, and quality control. An overall integrated management system involves a combination of a central computer system for tracking and management, and the people who use and interface with the computer system in the form of order fillers, pickers and other workers. The workers handle the manual aspects of the integrated management system under the command and control of information transmitted from the central computer system to the wireless wearable terminal.

As the workers complete their assigned tasks, a bi-directional communication stream of information is exchanged over a wireless network between wireless wearable terminals and the central computer system. Information received by each wireless wearable terminal from the central computer system is translated into voice instructions or text commands for the corresponding worker. Typically, the worker wears a headset coupled with the wearable device that has a microphone for voice data entry and an ear speaker for audio output feedback. Responses from the worker are input into the wireless wearable terminal by the headset microphone and communicated from the wireless wearable terminal to the central computer system. Through the headset microphone, workers may pose questions, report the progress in accomplishing their assigned tasks, and report working conditions, such as inventory shortages. Using such wireless wearable terminals, workers may perform assigned tasks virtually hands-free without equipment to juggle or paperwork to carry around. Because manual data entry is eliminated or, at the least, reduced, workers can perform their tasks faster, more accurately, and more productively.

An illustrative example of a set of worker tasks suitable for a wireless wearable terminal with voice capabilities may involve initially welcoming the worker to the computerized inventory management system and defining a particular task or order, for example, filling a load for a particular truck scheduled to depart from a warehouse. The worker may then answer with a particular area (e.g., freezer) that they will be working in for that order. The system then vocally directs the worker to a particular aisle and bin to pick a particular quantity of an item. The worker then vocally confirms a location and the number of picked items. The system may then direct the worker to a loading dock or bay for a particular truck to receive the order. As may be appreciated, the specific communications exchanged between the wireless wearable terminal and the central computer system can be task-specific and highly variable.

To perform speech recognition, speech recognizer algorithms analyze the received speech input using acoustic modeling and determine the likely word, or words, that were spoken (also known as the hypothesis). As part of the analysis and determination, the speech recognizer assigns confidence factors that quantitatively indicate how closely each word of the hypothesis matches the acoustic models. If the confidence factor is above the acceptance threshold, then the speech recognizer accepts the hypothesis as correctly recognized speech. If, however, the confidence factor is below the acceptance threshold, then the speech recognizer rejects or ignores the speech input. This rejection may require the user to repeat the speech input. By rejecting the hypothesis and requiring repetition of speech that was otherwise correctly recognized, this type of speech recognizer may reduce productivity and efficiency and, thereby, may waste time and money.

Accordingly, there is a need, unmet by current speech recognizer systems, for a speech recognizer that reduces unnecessary repetition. There is further a need for a speech recognizer that can accept speech input, under certain circumstances, even if the confidence factor is below the normal acceptance threshold, without sacrificing accuracy. It is further desirable to speed up the speech recognition system, improve the accuracy of the speech recognition system, and improve the acoustic models used by the speech recognition system. It is desirable to further address inefficiencies, delays and costs associated with voice-directed tasks and work, as noted above and to improve an overall speech recognition system. It is further desirable to improve a speech recognition system wherein a specific response might be expected from the user.

EP1377000A discloses a method used in a speech-enabled automatic directory system for determining a fallback threshold, wherein a fallback decision is taken by said directory system when a metric delivered by a speech recognition system is lower than said threshold. The method comprises collecting speech data corresponding to names uttered by users, running a speech recognition system over this speech data, determining the false acceptance rate for various thresholds of a metric delivered by a speech recognition system, determining an adequate fallback threshold based on said false acceptance rate.

WO96/13030A2 describes a method and apparatus for accessing a database where entries are linked to at least two sets of patterns. Recognition means recognise within a received signal one or more patterns of a first set of patterns. The recognised patterns are used to identify entries and compile a list of patterns in a second set of patterns to which those entries are also linked. The list is then used to recognise a second received signal. The received signals may, for example, be voice signals or signals indicating the origin or destination of the received signals.

## SUMMARY

The present invention in its various aspects is as set out in the appended claims.

## BRIEF DESCRIPTION OF THE DRAWINGS

The accompanying drawings, which are incorporated in and constitute a part of this specification, illustrate embodiments of the invention and, together with the detailed description of the embodiments given below, serve to explain the principles of the invention.

FIG. 1 illustrates a schematic view of a speech recognition system.
FIG. 2 illustrates a flowchart of an exemplary embodiment for modifying the behavior of the acceptance threshold of a speech recognition system based on knowledge about an expected response from a user.
Fig. 3 illustrates a flowchart of an exemplary embodiment for using the invention in speech recognition systems where words are reported individually as they are recognized.
Fig. 4 is a flowchart illustrating the operation of an embodiment of the invention that uses knowledge about an expected response to improve the speed of a speech recognition system;
Fig. 5 is a flowchart illustrating the operation of another alternative embodiment of the invention that uses knowledge about an expected response to improve the accuracy of a speech recognition system;
Fig. 6 is a flowchart illustrating the operation of another alternative embodiment of the invention for improving the models used by a speech recognition system based on knowledge about an expected response.

## DETAILED DESCRIPTION OF EMBODIMENTS OF THE INVENTION

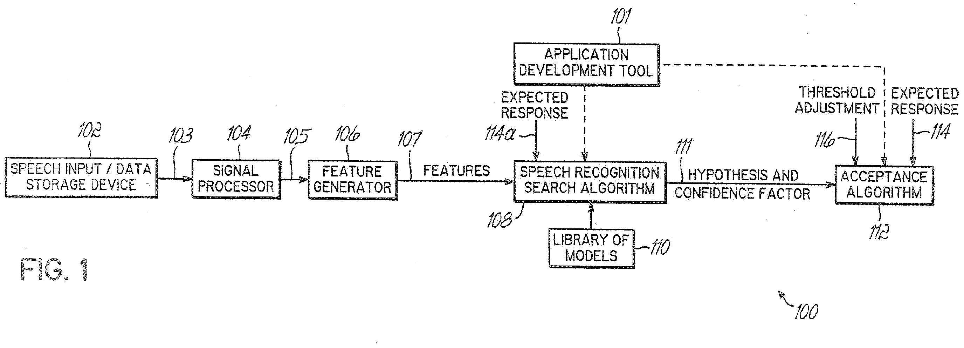

FIG. 1 illustrates a schematic view of a speech recognition system in accordance with the present invention. One of ordinary skill in the art will recognize that various of the functional blocks of the speech recognition system, including the inventive features, can be implemented using a variety of different technologies. The invention can be implemented into various different hardware and software configurations. One particular application for the invention is within a portable or wearable terminal that is used for voice-directed work. However, other implementations are possible as well and the invention is not limited to such voice-directed work applications. Furthermore, to implement various features of the inventive embodiment, the speech recognition software might be modified. Alternatively, a separate program might be utilized to modify the speech recognition system according to aspects of the invention.

Referring to FIG. 1 in system 100, a speech signal, such as from a system user, may be captured by a speech input device 102 in a variety of conventional ways. Typically, a microphone or other electro-acoustical device senses speech input from a user and converts it into an analog voltage signal 103 that then is forwarded to a signal processor 104. As is conventionally known, the signal processor 104 includes the necessary analog-to-digital converters, filters, and equalization circuitry that converts the analog speech input 103 into a digitized stream of data 105 that can be separated into separate units for analysis. Alternatively, this audio data from device 102 can be retrieved from a data storage device. As discussed herein, the system 100 might be realized by suitable hardware and software. As such, the blocks shown in FIG. 1 are not meant to indicate separate circuits or to be otherwise limiting, but rather show the functional features and components of the system.

In particular, the signal processor 104 divides the digital stream of data that is created into a sequence of time-slices, or frames 105, each of which is then processed by a feature generator 106, thereby producing a vector, matrix, or otherwise organized set of numbers 107 representing the acoustic features of the frames. Further explanation of an exemplary speech signal processor system is provided in US Patent No. 4,882,757, entitled SPEECH RECOGNITION SYSTEM, the disclosure of which is incorporated herein, by reference, in its entirety. This patent discloses Linear Predictive Coding (LPC) coefficients to represent speech; however, other functionally equivalent methods are contemplated within the scope of the present invention as well.

A speech recognition search algorithm function 108, realized by an appropriate circuit or software in the system 100 analyzes the feature vectors 107 in an attempt to determine what hypothesis to assign to the speech input captured by input device 102. As is known in the art in one recognition algorithm, the recognition search 108 relies on probabilistic models from a library of suitable models 110 to recognize the speech input 102. Some of the models in the library 110 may be customized to a user via templates or other means, while some models may be generic to all users.

When in operation, the search algorithm 108, in essence, compares the features 107 generated in the generator 106 with reference representations of speech, or speech models, in library 110 in order to determine the word or words that best match the speech input from device 102. Part of this recognition process is to assign a confidence factor for the speech to indicate how closely the sequence of features from the search algorithm 106 matches the closest or best-matching models in library 110. As such, a hypothesis, consisting of one or more vocabulary items and associated confidence factors 111 is directed to an acceptance algorithm 112. If the confidence factor is above a defined acceptance threshold, then the recognized speech is accepted by the acceptance algorithm 112. Acceptance algorithm 112 may also be realized by an appropriate circuit or software component of the system 100. If, however, the confidence factor is not above the acceptance threshold, as utilized by the acceptance algorithm, then the acceptance algorithm 112 ignores or rejects the recognized speech or prompts the user to repeat the speech. In this instance, the user may repeat the speech to input device 102.

One common modeling technique utilized for speech recognition includes Hidden Markov Models (HMM). In speech recognition, these models use sequences of states to describe vocabulary items, which may be words, phrases, or subword units. As used herein, the term "word" is used to denote a vocabulary item, and thus may mean a word, a segment or part of a word, or a compound word, such as "next slot" or "say again." Therefore, the term "word" is not limited to just a single word. Each state in an HMM represents one or more acoustic events and serves to assign a probability to each observed feature vector. Accordingly, a path through the HMM states produce a probabilistic indication of a series of acoustic feature vectors. The model is searched such that different, competing hypotheses (or paths) are scored; a process known as acoustic matching or acoustic searching. A state $S$ can be reached at a time $T$ via a number of different paths. For each path reaching a particular state at a particular time, a path probability is calculated. Using the Viterbi algorithm, each path through the HMM can be assigned a probability. In particular, the best path can be assigned a probability. Furthermore, each word in the best path can be assigned a probability. Each of these probabilities can be used as a confidence factor or combined with other measurements, estimates or numbers to derive a confidence factor. The path with the highest confidence factor, the best hypothesis, can then be further analyzed. Other paths, including those that are not the best hypothesis can also be analyzed as described herein. (The other paths are often referred to in the literature as n-best hypotheses or n-best list.) The confidence factor of the hypothesis or the confidence factors of each word in the hypothesis can be compared with an acceptance threshold. It should be understood that other speech recognition models are also contemplated within the scope of the present invention; for example, template matching dynamic time warping (DTW) and neural networks are two such exemplary, alternative modeling techniques.

While existing speech recognition systems generally address the task of determining the spoken input and recognizing the speech, there are still some drawbacks in such systems as noted above. For example, all of the hypotheses generated by the system, even the best-scoring hypothesis, may have confidence factors that fall below the acceptance threshold. In such a situation, the speech is rejected and may have to be repeated. As noted, this reduces productivity and efficiency. The present invention addresses such issues and improves upon the recognition efficiency by using expected speech to modify the acceptance threshold.

More specifically, in certain environments utilizing speech recognition systems, the expected speech or expected response to be received from a user is known beforehand or can be determined. For example, when picking a part from a bin, or placing an item in a warehouse location, there can be a check-digit that verifies the location of the user or the operation being performed by the user. During the operation, the user is prompted to go to a location and speak the check-digit (or check-phrase) displayed at and associated with the location. The speech recognition system attempts to recognize the user's spoken response and compare it with this check-digit or check-phrase to confirm that the user is at the correct location before prompting the user to perform an operation, such as picking a case of product. As used herein, "check-digit" refers to the set of one or more words that are associated with a location, bin or slot for the purpose of verifying a user's location. A "check-digit" may, for example, be a three-digit number or non-digit words, or a combination of these. In addition to this exemplary environment, there may be other scenarios in which a particular response or series of responses is expected from the user. For example, the expected response might be obtained by at least one of evaluating an expression or retrieving the expected response from a table or data structure prior to comparing the hypothesis to the expected response. Alternatively, the expected response might be dynamically determined prior to the comparison. Other such examples are described in US patent application 2003/0154075 and include password verification, quantity verification, and repeat/acknowledge messages. The exemplary embodiments of the present invention described herein involve situations wherein one (or more) known expected response(s) are utilized to improve speech recognition systems. In addition to these exemplary environments, an expected response may be known in other situations when a recognizer is waiting for a response from the user. As recognized by one of ordinary skill, the principles of the present invention can be advantageous within these situations as well.

In embodiments of the present invention, this knowledge about the response that is expected from the user is utilized to modify and refine a speech recognition system to increase efficiency and productivity. In particular, the speech recognizer, as described herein, uses the information about the expected response in addition to the conventional models and probabilistic determination methods in order to accurately determine what a user has said.

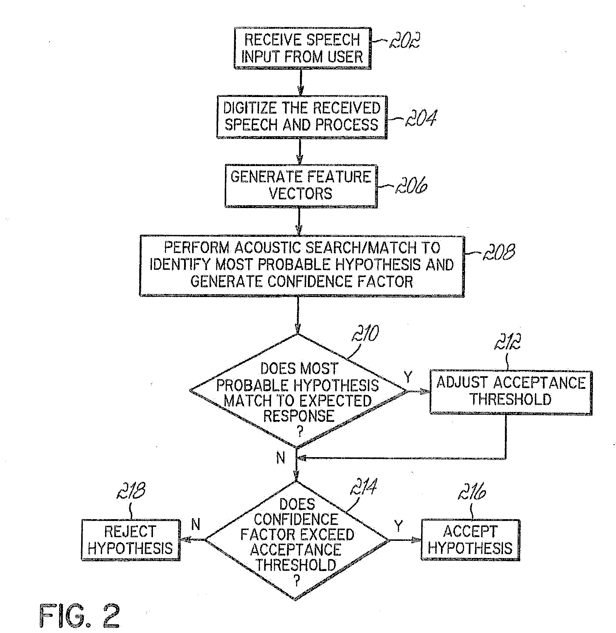

FIG. 2 illustrates a flowchart of an exemplary embodiment for modifying the behavior of an acoustic match/search process of a speech recognizer in accordance with aspects of the invention. In step 202, speech input is received from the user by an appropriate device 102 or is pulled from storage. The speech input is then digitized in step 204, such as by signal processor 104. As is known in the art, the digitized speech is separated, in step 206, into time slices and converted into feature vectors, such as by feature generator 106. As explained earlier, these feature vectors correspond to information within an acoustic model that allows a search and match to be performed to identify the most likely, or most probable, sequence of words spoken by the user. Step 208 reflects the match/search routine to determine a hypothesis with the highest associated confidence factor. Such a match/search routine may be performed utilizing the speech recognition search algorithm 108 and model library 110 as shown in FIG. 1.

In accordance with the principles of the present invention, this most probable sequence, or the hypothesis with the highest confidence factor, is compared, in step 210, to an expected response that was known beforehand. Then, based upon such a comparison, the acceptance algorithm is modified. If the comparison shows that the most probable speech hypothesis matches an expected response, the hypothesis is more favorably treated. Specifically, the acceptance threshold is modified by being downwardly adjusted or lowered in order to allow speech that may otherwise be rejected to be accepted and output as recognized by system 100. In one embodiment of the invention, as discussed herein, the assumption is that the recognizer uses higher or increased confidence scores to represent a higher confidence that the speech input 102 actually matches the recognizer's hypothesis. In such a case the invention would operate to decrease the acceptance threshold based upon knowledge of an expected response to allow recognition of the spoken input. The present invention also contemplates however that the confidence scale could be inverted. That is, the recognizer would use lower or low scores to represent higher confidence. In such a case, the confidence scores must be below a defined acceptance threshold for the recognizer to accept the speech input. In this case, in accordance with aspects of the invention, the acceptance threshold would then be increased (not decreased) to yield the same effect; namely, that the hypothesis or components of the hypothesis are more likely to be accepted by the system.

Referring to FIG. 2, in step 210, the most likely sequence of words (highest confidence factor), as determined by the search 208, is compared to the expected response. As noted above, the matching algorithm requires that a hypothesis is accepted only if its confidence factor exceeds an acceptance threshold 214. As part of the invention, in step 212, the acceptance threshold is adjusted, such as by being lowered, if the hypothesis matches the expected response. In such a case, the hypothesis 111 may initially have a confidence factor that is too low to have the hypothesis accepted by acceptance algorithm 112, and the operator would have had to repeat the response. However, in accordance with the principles of the present invention, if the otherwise rejectable hypothesis compares favorably to the expected response, the threshold is lowered. If the threshold is lowered enough, the most likely hypothesis is now recognized and accepted, in step 216, as recognized speech because its confidence factor exceeds the lowered acceptance threshold. There may still continue to be circumstances in which speech input received is not recognized even if prior knowledge of an expected response is available and the speech compared well with the expected response. For example, the threshold may not be lowered enough for the hypothesis to be accepted. In such an instance, the speech input is rejected in step 218, and the user repeats the speech input.

An example of the invention is useful to illustrate its features. For example, a user may be directed to a particular bin or slot and asked to speak the check-digits assigned to that bin or slot to verify his location in a warehouse. For the purpose of this example, we assume that the check-digit is "one one". The acceptance threshold for the system is set to 1.5. Various scenarios may arise in this situation.

In the first scenario, the user speaks the correct check-digits and the search algorithm produces "one one" as the top hypothesis, with a confidence factor of 2. In this case, the check-digits are accepted because the confidence factor exceeds the acceptance threshold and the user continues with the task.

In the second scenario, the user speaks the correct check-digits and the search algorithm again produces "one one" as the top hypothesis. However, in this later scenario, the hypothesis is only assigned a confidence factor of 1. Without the invention, this hypothesis would normally be rejected because the confidence factor is lower than the acceptance threshold of 1.5. The user would then be asked to repeat the speech causing delay or inefficiency.

With the invention, the system adapts. Specifically, the system may know the expected check-digit response from the user based on knowledge of the bin or slot. The invention makes a comparison of the top hypothesis to the expected response for the user. If the hypothesis matches the expected check-digit response for the user's location, the acceptance threshold is lowered, such as to 0.5 for example. Now the confidence factor (1) exceeds the acceptance threshold (0.5). The check-digit response of "one one" is then accepted and the user continues with the task without having to repeat the check-digits. This change constitutes savings of time leading to higher efficiency and productivity.

In a third scenario, the search algorithm produces incorrect check-digits as its top hypothesis (either the user said the wrong check-digits or the speech was recognized incorrectly or the hypothesis was produced due to background noise and not user speech), e.g. "one two", with a confidence factor of 1. Since the hypothesis does not match the expected check-digits at the user's location (i.e., bin/slot), the acceptance threshold is not adjusted or lowered. Therefore, since the confidence factor is below the acceptance threshold, the hypothesis is rejected. Therefore, the invention does not cause acceptance of the wrong response.

In a fourth scenario, the search algorithm produces incorrect check-digits as its top hypothesis (either the user said the wrong check-digits or the speech was recognized incorrectly or the hypothesis was produced due to background noise and not user speech), e.g. "one two." However, now the hypothesis has a confidence factor of 2. Since the confidence factor exceeds the rejection threshold (1.5), the hypothesis is accepted and the user is alerted that the check-digits are incorrect. As may be appreciated, there are numerous other situations where there is an expected response that would lead to adjusting the acceptance threshold. The example provides a single illustration of the invention and is not meant to limit the situations where it may be useful.

Thus, according to the method detailed in FIG. 2. Speech input is first analyzed and processed by the recognizer to determine the most likely match or hypothesis. Unlike previous methods that simply assign a probability to this hypothesis, the present invention compares the hypothesis to a predetermined value (or values), such as the expected response. If the expected response and the hypothesis are essentially the same, then the acceptance threshold for the hypothesis is adjusted such that speech recognition and acceptance is more likely.

There are a variety of ways to include knowledge about an expected result within a speech recognition application for the purposes of the invention. For example, when developing the software, the developer may include this information in tables or other data structures that are referenced at different points in the execution of the application. For example, the program may know where in its execution it is to look for a "YES" or "NO" answer. Additionally, or alternatively, the information about the expected result can be calculated dynamically using programming logic included in the speech recognition application. For example, it is well known that the accuracy of a credit card number can be calculated based on a particular checksum algorithm. In such an example, the speech recognition program would not need to have all the checksums precalculated beforehand, but can implement the checksum algorithm dynamically to calculate a value on-the-fly as needed. In another example, the program may know the location (bin/slot) that a user has been sent to and may then know the specific check-digits to look for in the expected response. This on-the-fly information is still available as "prior knowledge" with which to evaluate the speech received by a user, and thus the present invention may use prestored expected responses or dynamically developed expected responses. Referring to FIG. 1, the expected response 114 may be used by the acceptance algorithm and may be retrieved from memory or calculated dynamically by system 100 in order to compare it to the hypothesis.

The amount by which the acceptance threshold is adjusted can be determined in various ways according to embodiments of the invention. In one embodiment, the voice development tool or API used to implement system 100 can provide a means for the application developer to specify the adjustment amount. For example, a fixed amount of threshold adjustment 116 may be built into the system 100 and used by acceptance algorithm 112 as shown in FIG. 1. Alternatively, the recognition system or application can be configured to automatically calculate an appropriate adjustment amount to lessen the knowledge needed by the application developer and prevent inappropriate use of the features of the invention.

For example, in one embodiment, to guard against the expected response being accidentally produced and accepted by the recognition system, the adjustment of the acceptance threshold may be dynamically controlled by an algorithm that takes into account the likelihood of the recognition system accidentally producing the expected response. For example, in one such embodiment, the present invention contemplates at least two independent components of such a threshold adjustment algorithm: the number of vocabulary items at the point in the application where the expected response is used (the breadth of the search), and the number of vocabulary items in the expected response (the depth). For example, if there are only two possible responses (e.g., a "yes" or "no" response) with one being the expected response, then the adjustment to the acceptance threshold could be made very small because the recognizer is looking for a single word answer (depth = 1) from only two possibilities (breadth = 2).

Alternatively, in such a scenario, the system 100 could be configured to provide no adjustment to the acceptance threshold, because with such a low depth and low breadth, there is a higher chance of the system producing the expected response by accident.

However, in another recognition scenario, if there are a hundred possible responses (e.g., a two-digit check-digit), then the probability of producing the expected response by accident would be smaller and the adjustment to the acceptance threshold therefore may be made more significant. For example, two check-digits will have a hundred possible responses (10 possibilities x 10 possibilities) making a breadth 100 and a depth of 2 for the two check-digits. This would allow a more significant threshold adjustment to be used.

In another embodiment, the threshold adjustment may depend on how likely the user is to say the expected response. If, in a particular application, the user says the expected response 99% of the time, the threshold adjustment may be greater than in applications where the user's response is not as predictable. For example, if the user goes to the proper spot or location in a warehouse most of the time or is asked to speak a password, it may be desirable for the system to use a greater adjustment, because the response will usually be correct. However, if the system is less sure of the response to be received, less adjustment to the threshold will be used to prevent improper acceptance of a response. The system 100 could thus dynamically vary the threshold adjustment amount accordingly based on the likelihood of the user saying the expected response. The likelihood of the user saying the expected response could be determined ahead of time or dynamically and/or automatically estimated based on actual usage patterns.

For example, in the check-digits scenario described earlier, the probability ($P_e$) that the invention causes the user to pick an item from the wrong slot by incorrectly accepting the hypothesis as the expected response is given by,

$$P_e = P_a * P_b * P_c * P_d$$

Where:

Pa is the probability that the user is at the wrong slot or shelf,
Pb is the probability that the top hypothesis is not what the user said,
Pc is the probability that the misrecognition matches the expected response, and
Pd is the probability that the confidence factor is less than the acceptance threshold but higher than the adjusted acceptance threshold for incorrect hypotheses.

Pa, Pb, Pc, and Pd depend on many factors including (but not limited to) the following:

Pa: user, the site layout, etc.
Pb: the accuracy of the speech recognizer and the speech pattern of the user
Pc: the depth and breadth of the grammar at the given instance
Pd: the distribution of the confidence scores, the acceptance threshold, and the acceptance threshold adjustment.

It is easy to see that to control $P_e$ by means of the threshold adjustment, the other probabilities need to be estimated. Pa, Pb, Pc, and Pd may be static quantities or may be adjusted dynamically as the system observes a given user's patterns.

For example, if the system notices that a user is more prone to go to an incorrect shelf, it would adjust its estimate of Pa higher. To maintain the same $P_e$, the system would then change its adjustment to the acceptance threshold to make Pd lower. Therefore, the amount of the threshold adjustment may be dynamically determined. This is just one of many possible ways and a person of ordinary skill in the art will appreciate that the other factors can also affect the threshold adjustment according to the formula noted above.

In still another embodiment, the acceptance threshold adjustment amount can also be determined by taking into account the "cost" of the recognizer making an error. A smaller adjustment would be used when the cost is greater, to prevent errors as described above where an incorrect hypothesis is mistakenly recognized as the expected response. For example, the invention could be used on the passcode for a rocket or missile launcher or in a scenario to confirm a warehouse worker's location when picking health and beauty products. The "cost" of making a mistake in the rocket example is much higher than in the warehouse example. Thus, all other components/factors being equal, the adjustment amount used for the rocket example should be chosen to be less than the adjustment for the warehouse example. In practice, this cost of mistakenly recognizing the expected response must be balanced against the cost of requiring that the operator repeat the speech input 102.

In one embodiment of the invention, the cost of mistakenly recognizing the hypothesis as the expected response can be expressed as:

$$C_{e1,avg} = C_{e1} * P_e$$

Where:

$C_{e1}$ is the cost for mistakenly recognizing the expected response, and
$C_{e1,avg}$ is the average cost for mistakenly recognizing the expected response.

This is compared with the average savings that the invention generates by preventing the operator from having to repeat the speech input when he's at the correct location and says the correct check-digits, S.

$$S = C_{rep} * (1 - P_a) * (1 - P_b) * P_f$$

Where Pa and Pb are as defined above.

$C_{rep}$ is the cost of the operator having to repeat himself, and

Pf is the probability that the confidence factor is between the unadjusted and adjusted acceptance thresholds for correct hypotheses.

In still another embodiment, the system 100, through the use of the invention and a threshold adjustment, may be used to effectively override the acceptance algorithm. For example, in those scenarios wherein the cost of a wrong answer is insignificant in the context of the application, the reduction to the threshold can effectively be infinite. That is, the recognizer would accept the hypothesis, (which equals the expected response) regardless of how its confidence factor relates to the threshold.

In accordance with another aspect of the invention, a related tool allows a voice application developer to specify the expected response for the system. (Herein, "voice application developer" or "developer" is used to refer to the user of the voice application development tool, i.e. the person who creates or programs the voice application. The developer is not to be confused with the user of the voice recognition system 100.) Voice application development tools allow a voice application developer to specify what vocabulary items and grammar are available to be recognized at a given point of a dialog. At least one such voice application development tool 101 exists separate and apart from the speech recognition system 100. The outputs of the tool 101 are used by the speech recognition system 100 to define the behavior of the speech recognition system. For example, using an interface of the voice application development tool, a developer specifies what information is to be delivered to a user of the speech recognition system, such as what sentences or questions the system will prompt the user for. The developer also specifies what responses the speech recognizer should attempt to recognize. For example, using a voice application development tool 101, a developer can specify that the voice application prompts the user "What is the check-digit?" and that the voice application should listen for the vocabulary items "one", "two", "three", "four", "five", or "six." Referring to FIG. 1, system 100 may be designed such that models for responses, which the user may say 110 are available to the search algorithm 108, or other components of the system at the proper juncture in the application dialog. In accordance with the invention, the tool also provides the developer the means to specify certain expected responses 114 in the system. For the example above, the tool would allow the developer to specify that the expected response is the correct check-digit (e.g. "one"). In another aspect, the voice application development tool may be used to allow the operator to specify one or more expected responses in the form of an expression or expressions that the tool 101, speech recognition system 100 or voice application knows how to evaluate to come up with expected response(s). The expressions may, for example, contain constants, mathematical or string functions, table lookups, and application variables. As noted above, with the invention, the voice application development tool interface may also allow the voice application developer to specify the threshold adjustment amount or any values used to calculate it for each expected response. The tool 101 has an appropriate processing function for processing information that is input by the developer through the tool interface to generate an output. The voice application development tool 101 stores at least one of the following in its output for use by the speech recognition system 100: the specification of the expected response (i.e. the expression(s) that are later evaluated to yield the expected response), the adjustment amounts, and values that can be used for calculating the adjustment amounts. The system might use the latter to dynamically set the adjustment amount.

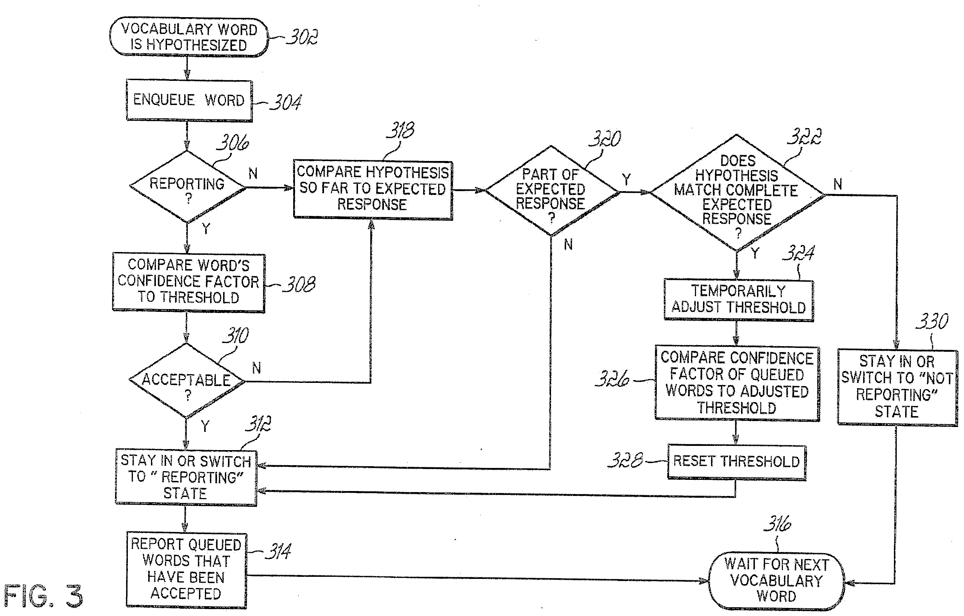

Figure 3 illustrates another aspect of the present invention wherein the confidence factors of words or other parts of a multi-word input utterance are individually compared to an acceptance threshold. In this embodiment, under certain circumstances, the decision on whether to accept and report an individual word is delayed in order to take advantage of the expected response features of the invention. Specifically, the decision on whether to accept words whose confidence factors are not initially above the acceptance threshold is delayed until it is known that either the hypothesis matches the complete expected response or the hypothesis does not match the expected response. In speech recognition systems where words are reported individually as soon as they are determined, this aspect of the invention provides the benefit that words continue to be reported as soon as possible, minimizing system response time, except in those instances when the expected response features of the invention take effect to help recognition performance. For example, it may be that a three or four word utterance has one word whose confidence factor does not immediately exceed the acceptance threshold, whereas other words in the utterance have confidence factors that exceed the acceptance threshold and are thus accepted. The invention provides acceptance of the hypothesis based upon the expected response even if one or more words are initially rejected. While the example below utilizes a three-word utterance with only one word initially below the acceptance threshold, the invention is not so limited.

Referring to Figure 3, as an utterance is spoken, the speech recognition search algorithm 108 generates individual words (or vocabulary items) of a hypothesis, as set forth in step 302. For example, in response to being prompted to speak check-digits, a user might speak the check-digits 125 or "one," "two," "five", and the search algorithm might produce a hypothesis consisting of the words "one", "two", and "five", one word at a time. However, for any number of various reasons, the system 100 may not have a high confidence that the user spoke the word "two". In accordance with the principles of the present invention, the system may know that the expected response for the check-digits is "one, two, five", and may utilize the expected response feature of the invention to ensure that the speech of the user is properly recognized and accepted despite one or more words having a confidence factor or value that is below an acceptance threshold.

Referring again to Figure 3, an utterance is spoken by a user and the search algorithm 108 produces a hypothesis consisting of individual vocabulary words. The system generates confidence factors for the words of the hypothesis. As the search engine produces each word, the system can queue or otherwise store each word for immediate or later processing as described below, as indicated by step 304. As the utterances begin, the system will generally be in a Reporting state, and thus flow will continue through step 306 to step 308. The first vocabulary word in the utterance "one two five" is the word "one." For the portion of the hypothesis corresponding to the word "one," the confidence factor is compared to an acceptance threshold (step 308). In the present example, the word "one" has a sufficiently high confidence factor to exceed the acceptance threshold and, thus proceeds through step 310 as an accepted word. As such, the system stays in the Reporting state (step 312) and the word "one" is reported in step 314. The system then proceeds to wait for the next word in the utterance as noted in step 316.

In the example, the utterance continues because three digits of the number 125 were spoken. With the recognition of the vocabulary word "two" the system queues or otherwise stores the vocabulary word "two" and its confidence factor. As the system is still in the Reporting state, it thus proceeds through step 306 to step 308. However, in this example, the word "two", with its low confidence factor as noted above, does not pass the acceptance criteria. Pursuant to step 310, the word "two" is not acceptable or is initially rejected. In such a case, in accordance with the principles of the present invention, the system progresses on a path to step 318 so that the portion of the hypothesis or utterance string, which at this stage includes the words "one two," is compared to the beginning portion of the expected response. Since the expected response is "one two five", the first parts or portion of the hypothesis compare favorably to the first parts or portion of the expected response, such that the portion of the hypothesis generated so far is considered to be part of the expected response, as noted in step 318. Because the hypothesis is part of the expected response, the invention progresses through step 320 to step 322. In step 322, the hypothesis generated so far is compared to the expected response in its entirety. Since the hypothesis "one two" does not match the complete expected response "one two five", the flow proceeds to step 330, where the system is switched to a "not reporting" state. Then the system waits for the next vocabulary word of the hypothesis in step 316.

The system waits in step 316 until the next word is received. In the example, the next word is "five." The vocabulary word encounters this system now in the Not Reporting state (step 306). Therefore, the system progresses to step 318 where the hypothesis string, that now includes the words "one, two, five", is compared to the beginning portion of the expected response, which is "one two five". Since the utterance string is part of the expected response pursuant to step 320, the next determination to be made is whether the complete expected response has been received. In this example, the last word "five " completes the expected response and, thus, pursuant to step 322, the system proceed to step 324 wherein the acceptance threshold is lowered or otherwise appropriately adjusted, and the confidence factor of each queued word is compared to the adjusted threshold (step 326). In one example, the lowering of the acceptance threshold may have been sufficient so that the spoken "two" was now accepted. Therefore, all words "one, two, five" are accepted. Alternatively, if the threshold was not lowered enough, then the "two" would not be accepted. The threshold is reset to its original value in step 328, and pursuant to step 312, the system switches to a Reporting state. In step 314, words that have been queued and are now accepted are reported as recognized words. In the example just given, because the utterance compared favorably to the expected response and the confidence factor of each word of the hypothesis met the adjusted acceptance threshold, the entire utterance (e.g., the three words "one two five") is reported as being accepted.

In an alternative example, one or more of the words might not be part of the expected response. For example, the middle word might have been heard and recognized as "three" rather than "two." In this case, the utterance detected or hypothesis is "one three five." If "one" is initially accepted and "three" is not accepted because it has a low confidence factor, then flow would proceed through steps 308 and 310 to step 318. Then, pursuant to a comparison to the expected response (step 318), it would be determined that the partial hypothesis "one three" was not part of the expected response (step 320). Then, the system would not adjust the threshold, switch to a "not reporting" state, nor delay the decision on this word. As such, if a word is initially rejected and is not part of the expected response, the word would not be accepted. If the last word spoken was actually "five" but was initially rejected and "one two" has been accepted, the word "five" may be stored according to the principles of the invention (step 304) and thereafter re-evaluated against a lower threshold value (step 326). In this example, the "five" is only stored long enough to test it with the adjusted threshold, since it matches the last word of the expected response. Although one feature of the invention is that the reporting of accepted words is sometimes delayed, this example illustrates that the invention does not always delay the reporting of accepted words.

As such, the present invention is able to analyze individual words of a multi-word utterance and instead of initially rejecting all or part of the utterance because one or more words are not initially accepted, it is able to queue or store the unaccepted words and then make a later comparison or analysis based upon how the utterance matches against the expected response string. In that way, the invention is able to accept the properly spoken expected response even though one or more words have confidence factors that do not compare favorably against the initial acceptance threshold, but do compare favorably against the adjusted threshold.

This invention also presents several other approaches and embodiments to improving a speech recognition system when a specific response is expected from the user (expected response). That is, knowledge of the expected response is used by the speech recognition algorithm or system to improve the overall speech recognition process. In one additional embodiment, the recognition system compares the observed speech features only to the models of the expected response and if the match is satisfactory, then the expected response is accepted. If the match is not satisfactory, then the observed features are processed by the search algorithm in the normal fashion, i.e., the features are compared to the models of all the words possible at this point in the grammar. The advantage of this approach is great computational savings anytime the expected response is given by the user. This reduction in computation will allow the recognition system to produce a result with very little delay if any, thereby increasing the efficiency and productivity of the user.

In still another approach, the recognition system alters its acoustic models and its search strategy through the possible models to favor the expected response. The alterations affect parameters such as word insertions penalties, state transition penalties and pruning levels.

In the still another approach, the recognition system performs unsupervised adaptation when the observed features produce a hypothesis that matches the expected response. The observed features are then used to adapt the models. This improves the accuracy of the speech recognition system for future utterances.

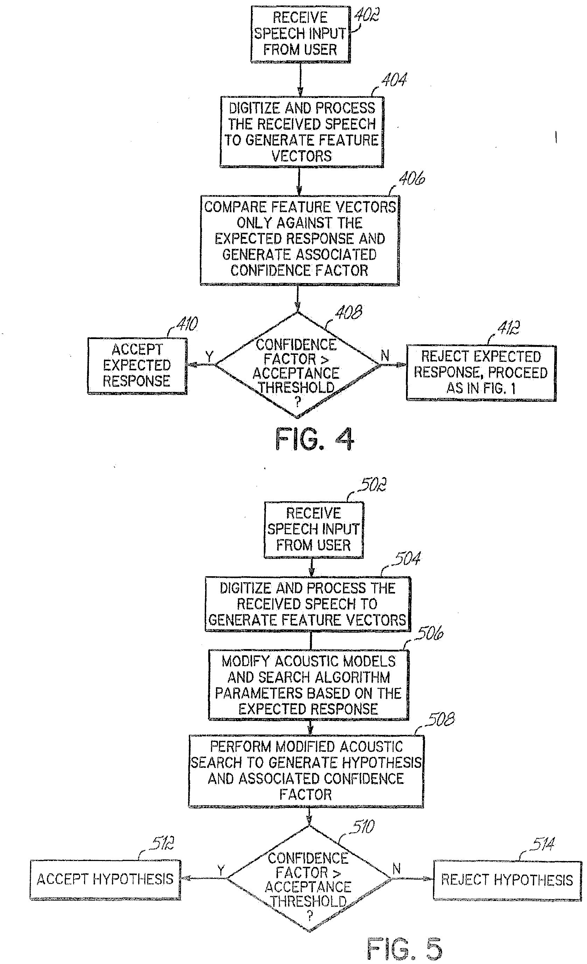

The embodiments of the invention disclosed herein might be incorporated in one or more appropriate circuits in the system 100 or software for such a system as shown in Figure 1. For example, the embodiments might be incorporated into the processing circuitry and hardware or the software associated with the search algorithm 108 as shown. To that end, information or data regarding an expected response 114a might be provided to algorithm 108 for implementing the invention. Of course, the positioning of the appropriate hardware in the overall system is not limited to such an example. FIG. 4 illustrates a flowchart of an embodiment of the invention that uses knowledge about an expected response to improve the speed of a speech recognition system. As explained above, a speech recognizer searches through an HMM, or other type of model, to find a list of probable matches and then analyzes the potential matches accordingly. In such an acoustic match/search technique, all the different paths of the model are traversed until being eliminated according to the Viterbi algorithm, or similar decision process as will be understood by a person of ordinary skill in the art.

In accordance with the embodiment of the invention as set forth in the flowchart of FIG. 4, in step 402, speech input is received from a user in a suitable fashion, such as through a microphone. The received or input speech is then digitized and separated into various feature vectors as noted in step 404. In step 406, the speech recognizer analyzes the received speech input, in the form of such feature vectors, and compares the features of the input speech against only those models of the expected response in the match/search algorithm rather than against all of the models of all the possible responses. That is, only the model(s) associated with the expected response are utilized in the match/search algorithm, rather than utilizing all of the possible models associated with all possible responses that the user might give or speak. The system then determines a confidence factor for the input speech based on such speech analysis and comparison, and the resulting confidence factor is compared against the acceptance threshold, as noted in step 408.

If the confidence factor, based upon the direct comparison of the input speech to the expected response, exceeds the acceptance threshold, then the hypothesis is accepted in step 410. Because of the direct nature of such analysis, this embodiment allows dramatic response time improvements in the speech recognition. This approach requires less computation time, because it is simpler, and therefore faster, to compute a confidence factor of a single sequence of words by comparing the observed speech features to a single option or model (i.e., the expected response) than it is to search for the best sequence of words from a large set of possible options.

Alternatively, if the confidence factor is below the acceptance threshold based upon such an expected response analysis, then the speech is analyzed to obtain the most likely hypothesis in the typical fashion. (e.g., as shown in FIG. 1) (412). In another embodiment, both processes (i.e., comparing the observed features against the model of the expected response as well as producing the most likely hypothesis using a search through all the possible models) can be performed simultaneously with the first process having higher priority than the second. Also the confidence factor resulting from comparing the features to the model of the expected response may be compared to the standard acceptance threshold or to an adjusted threshold (such as one adjusted downwardly) with the adjustment and comparison taking place as described above. Alternatively, the confidence factor could be compared to a different, higher (more discriminating) acceptance threshold. It may be desirable to do this to prevent the expected response from erroneously being recognized when the user did not say it, such as in systems and/or conditions when there is a sufficiently high likelihood that this may occur. Therefore the acceptance threshold may be adjusted upwardly or downwardly.

An example is helpful in illustrating such an embodiment of the invention. In a typical voice-directed work dialog, with a central system or computer interfacing with a plurality of portable terminals carried or worn by workers, the voice interface may ask the worker to speak certain information, such as a numerical check digit. For example, in the picking application described earlier, the user may be directed to a shelf or bin and asked to pick a product and speak a two-digit numerical check digit to indicate that they are at the proper shelf or bin. The possible responses for a single numerical word spoken by the user are "zero" to "nine" and thus with a two-digit check digit, there are 100 possible combinations. The user will then speak the two-digit check digit, for example "three five" (3, 5). The system or terminal, pursuant to an aspect of the invention, knows that the expected response from the user for the desired check digits at that shelf or bin is the words "three five". In the invention, the speech recognizer only compares the observed features of the spoken words to the model associated with the expected response of "three five". That is, effectively a single response model is used in the analysis. Without the invention, the speech recognition system would compare the observed features of the user's spoken words to the models corresponding to the 100 possible combinations of two-digit check digits. As may be appreciated, this is relatively time consuming. With the invention however, the speech recognition system compares the observed features with only those of the expected response (the check digit corresponding to the location to which the user was directed 3, 5) resulting in a computation time savings of a factor of 100 whenever the user goes to the correct shelf and says the expected response.

If the observed features are not a good match to those corresponding to the expected response, the speech recognition system would then examine all 100 or just the remaining 99 possible combinations. Therefore, in one aspect of the invention, if the initial comparison does not a produce a match of the expected response, the speech recognition might proceed as normal and compare the input speech to all of the remaining or available models.

In one embodiment, only a single expected response is used. Alternatively, there may be several possible expected responses that form a subset within a larger set of possible responses. For example, a set or subset of responses might be stored in memory for use in such fashion. The comparison of the input speech might be made to the expected responses in the smaller subset rather than to all possible responses, thus realizing a time savings, although not as large as that realized using the comparison to just a single expected response.

In addition to the embodiments described above, the present invention contemplates additional embodiments and ways to use information about an expected response to improve the accuracy and efficiency of a speech recognition system. In an alternative embodiment, the acoustic match/search algorithm itself, may be modified based on the expected response. For example, in one suitable speech recognition scenario using HHM models and the Viterbi algorithm, probabilities are associated with transitions between various states, with the observation of an output from a state, and with starting at an initial state. In accordance with one aspect of the invention, the transition probabilities, which may be thought of as the cost or penalty for changing from one state to another state, are modified based on the knowledge of an expected response and the likely state transitions that the expected response would elicit. By changing the state transition costs or transition probabilities within the model, one path can be scored higher or lower based on the knowledge about the expected response. Therefore, in one embodiment of the invention, the match/search and recognition algorithm, that is, the models and paths that the spoken words traverse in the analysis process, are modified to boost the overall probability or confidence factor of the input speech if it closely matches that expected response.

Other modifications or changes may be made to the acoustic match/search process. For example, the initial state probability or insertion penalty, or word insertion penalty may be modified to affect the overall outcome of the process. Alternatively, applying a bias or penalty per frame of the spoken word(s) can also be used to affect the path through the models that results in the highest score. Also, the pruning algorithm responsible for eliminating low scoring hypotheses during the search of various search algorithms may be modified to make sure it does not eliminate search path associated with the expected response. One of ordinary skill will recognize that there are a number of ways to modify the way the acoustic match/search process scores the different possible alternatives in a model; however, in accordance with the principles of the present invention, these different scoring techniques are modified based on knowledge about an expected response.

Such an improvement will emphasize the expected response by boosting the score or probability/confidence factor of its hypothesis. For example, an expected response that is the correct recognition may actually be the second or third highest-scoring hypothesis due to its probability score from a typical match/search process. Therefore, the expected response (and correct recognition) might be lost or disregarded because it is not initially the hypothesis with the highest probability score. However, using the invention to modify the match/search process as disclosed herein, the expected response is essentially allowed to become the number one or highest-scoring hypothesis.

In FIG. 5, a flowchart is depicted which illustrates this alternative embodiment of the invention in the form of a method for modifying the search to improve a speech recognition system based on the expected response. Similar to previously described methods, speech input is received in step 502 and processed in step 504 to create feature vectors that can be used during an acoustic match/search process. In step 506, the acoustic model being searched is modified based on the expected response. More specifically, the acoustic model is modified to generally favor the expected response. For example, these changes may involve adjusting the cost or penalties associated with different transitions or states within the model based on their likelihood of occurrence in view of the expected response. Alternatively other modifications or changes may be made to the acoustic match/search process including modifying the initial state probability or insertion penalty, or applying a bias, or boost or penalty per frame as noted above.

Returning to the flowchart of Figure 5, in step 508, the hypothesis is identified by the modified acoustic match/search process along with an associated confidence factor. Then, in step 510, the confidence factor of the hypothesis is compared to the acceptance threshold. If the comparison is favorable, then the speech is recognized and accepted in step 512. If not, then the speech is rejected 514 and the user can repeat the speech in step 502.

In accordance with another embodiment of the invention, at least some of the speech recognition models contemplated within the scope of the present invention utilize adaptive learning or training based upon the expected response. As is known to those skilled in the art of speech recognition, as more speech samples are received and processed by a speech recognition system, the accuracy of the models can be improved through training or other learning or adaptation algorithms. This training and/or adaptation can be in a supervised manner or in an unsupervised manner. The present invention utilizes the expected response as a trigger for providing adaptation/training and enables such adaptation/ training in a semi-supervised mode, eliminating the drawbacks of supervised and unsupervised training and adaptation. More specifically, when the hypothesis resulting from the input speech compares favorably with the expected response, the results of such a comparison are utilized as a feedback to provide adaptation of the acoustic models of the speech recognition system. This provides significant advantages over existing adaptation.

For example, unsupervised training algorithms, where a reliable transcript of the speech samples is not available to the system, often suffer from instability or require compromises that limit the improvements to the recognition accuracy that the unsupervised training algorithms can deliver. In unsupervised adaptation and training, the models are created and adapted while the user is speaking. Thus, models can constantly be improved as the user uses the system and provides spoken commands and responses. However, such unsupervised adaptation uses input speech with unreliable machine-generated transcription that can make the models go bad or degrade very quickly (e.g., a cough or other random noise might be interpreted as a word and used to update the models of that word).

On the other hand, supervised training, where a reliable transcript of the speech samples is known, typically requires a time investment either by the user, where he reads a known transcript, or by a transcriptionist where a speech sample is manually transcribed to generate the reliable transcript. Supervised training thus requires additional burdensome time or cost, and does not offer the benefit that performance improves as the user uses the system. For example, in supervised training or adaptation, a user may speak a variety of words from defined templates or transcripts that are then used to make or train the models for the speech recognition engine. That is, the models are trained and adapted with the known transcripts. While this process enables the creation of good models, such training/adaptation is also slow and requires the user to spend significant time training and adapting the system.

The present invention's use of an expected response offers several advantages over prior approaches, both supervised and unsupervised. Compared to an unsupervised system, the combination of the expected response provided by the application and the acoustic match of the recognizer enables a much more reliable transcript to be generated. This prevents the instability problems, removing the need for compromises that limit recognition accuracy. For example, random noise will not match an expected response and thus will not be utilized in the adaptation provided by the invention.

The invention's advantages over supervised training include reduced time and cost by eliminating the step of generating a reliable transcript for a sample of audio (or collecting audio from a user given a transcript). The invention has the added advantages that it can continuously adapt to the user's new speaking patterns and any other artifacts in the audio, such as effects from microphones or background noise. This training using the knowledge of the expected response can adapt the prior models (adaptation) or create new models based on the data (training). This improves the future performance of the speech recognition system.

One advantageous method of adapting the models is to take advantage of the outcome of the acoustic match/search processes that implement one or more of the improvement methods described herein that take into account knowledge about an expected response. For example, using the invention as described with relation to FIG. 2, the confidence factor may initially be too low to allow acceptance of the speech input but will ultimately exceed the acceptance threshold value when the before-hand knowledge about the expected response is taken into account in accordance with one aspect of the invention. In accordance with the invention, the model may be adapted or trained with this speech input that is reflective of the expected response. As a result, the next time a similar speech input is received by the speech recognition system, the adapted model is more likely to initially recognize and accept the speech even before the acceptance threshold is adjusted. Therefore, adjustment of the acceptance threshold as noted with Figure 2 above may not have to be constantly applied once the model has been adapted properly to take into account the past feedback regarding the expected response. This results in further efficiencies and time savings in the system,

Similarly, the other methods of FIG. 4 and FIG. 5 provide an opportunity for the speech recognition system to accept a word based on before-hand knowledge in instances in which it would have otherwise rejected the speech input as unrecognizable. Each of these implementations of the invention allows the speech model to be taught and adapted using an expected response so as to improve future accuracy. For example, in the embodiment of Figure 4 if the hypothesis matches just the expected response and the confidence factor exceeds the threshold, the speech input may be utilized to further adapt the models of the match/search algorithm. In essence, the expected response is the intended outcome of the acoustic match/search through the model, and the received speech from the user is the input to the process. Using such matched input/output pairs, one of ordinary skill will appreciate many techniques for adapting and refining the models, all of which are contemplated within the scope of the present invention.

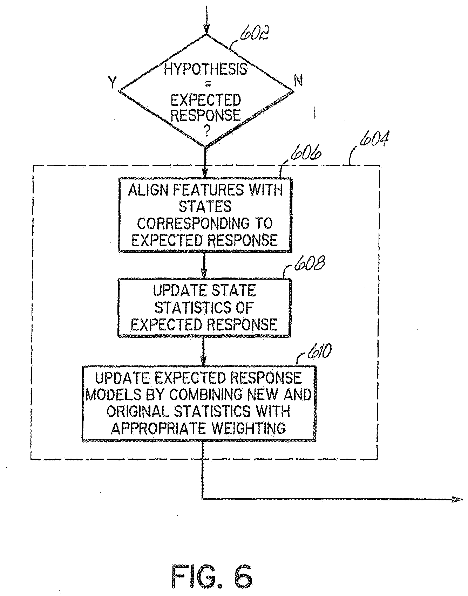

FIG. 6 describes one embodiment of the proposed adaptation based on the hypothesis matching the expected response. In step 602, the hypothesis determined from the speech recognition engine is compared to the expected response. If the comparison is favorable then, in step 604, the acoustic models of the expected response are updated using the features associated with the hypothesis. That is, the determination that the best hypothesis matches the expected response acts as a trigger for providing the adaptation. In one embodiment, the adaptation may be automatic each time that the comparison of step 602 indicates that the hypothesis matches the expected response. In another embodiment the adaptation might occur only if the comparison meets additional specific criteria. For example, additional rules can be applied to control the update of the acoustic models. In one example, the acoustic models for a given word in the expected response may be updated only if the confidence factor associated with the word exceeds a minimum amount or falls within a specific range, indicating a successful comparison. Another criteria may be that this situation of a successful comparison occurs a minimum number of times.

It will be understood by a person of ordinary skill in the art that the match/search algorithm for a speech recognition system may be adapted in a number of different ways. One suitable adaptation involves adapting the acoustic model(s) associated with the expected response using features from words that are spoken by the user (i.e. input speech) that compares favorably to the expected response. The adaptation in step 604, for example, is performed by aligning the observed features of the input speech with the states in the models associated with the words in the expected response (step 606). Then the statistics (e.g., means and variances) of said states are updated using the values of the observed features of the input speech (step 608). For example, the Baum-Welch re-estimation algorithm might be used to perform such alignment. These values are mixed into the models with the appropriate weighting (step 610) to maintain a balance between the previous training data and the new features. Thus, in one embodiment of the invention using the expected response as a trigger for adaptation, the new models are created through adaptation by using the observed features of the input speech to adapt the existing or original models. In that scenario, both the observed features of the input speech and the existing features of the original models, and the statistics associated with each, are used to create the new models. Additionally, in such a scenario, the new statistics might be weighted in various fashions to tailor their effect on the original statistics in the model.

In an alternative embodiment of the invention, only the new observed features, and information therefrom, might be utilized to create the new model. That is, a new model is created with the new features only.

In general, the adaptation could be performed using data from a single user or multiple users. In one particular embodiment, only speech data from an individual user might be used to perform the adaptation. This generates a model that is adapted for that user and performs well for that user.

The present invention, in its various forms, may be implemented directly in the software of a speech recognition program or system. That is, the improvements are actually part of the speech recognition algorithm. Alternatively, the invention does not have to be built into the recognizer. Rather a separate program or application may be utilized that uses a speech recognizer and the expected response to provide the benefits of the invention.

For example a separate application or software module may be utilized to handle the adaptation in accordance with the principles of the invention. Specifically, an application may interface with a speech recognizer to control when and how the speech recognizer is adapted. The application uses the information associated with the expected response and other information such as the results of the comparison between the expected response and the input speech of the user to tell the recognizer to adapt using the audio features associated with the expected response. The separate adapting application may then control how the adaptation progresses and also determine the criteria to be met before adaptation is ordered. Furthermore, once adaptation is to proceed, the application may determine whether the existing models are replaced with new models created with the new features only or whether the existing models are just adapted using information from both the new features and the existing features of the existing models.

In various of the scenarios that are discussed herein, the expected response is in the form of a string of words, such as a response within a voice-directed work dialog for example. In other scenarios, the expected response comparison might incorporate a rule rather than a matching scenario. For example, US Patent Application 2003/0154075 (incorporated herein by reference in its entirety) incorporates other scenarios to determine if a response in the input speech is a proper or expected response, such as checksum algorithms, database matching etc. The selective adaptation provided by the present invention utilizing the features of the input speech that are verified as an expected response may use these other rules or scenarios as the trigger for adaptation in accordance with the present invention.

**Claims**

1.  A computer implemented method for recognizing speech comprising the steps of:

    in a speech dialog, determining an expected response to be received as input speech from a user;
    based upon the determined expected response, modifying a speech recognition match/search algorithm (108) to increase a confidence factor of a hypothesis for the expected response over a confidence factor of a hypothesis for another possible response that can be received as input speech from the user and analysed using the modified match/search algorithm (108); and
    processing input speech from a user with the modified match/search algorithm (108) to generate a hypothesis and confidence factor for the input speech;
    wherein modifying the speech recognition match/search algorithm (108) comprises modifying and/or applying the following parameter to the speech recognition match/search algorithm: an insertion penalty.

2.  The method of claim 1, further comprising comparing the hypothesis confidence factor to an acceptance threshold for accepting the hypothesis.

3.  The method of claim 1, wherein the match/search algorithm (108) processes the input speech through a plurality of states and the method further comprises modifying transition probabilities associated with transitions between multiple states in the match/search algorithm (108).

4.  The method of claim 1, wherein the match/search algorithm (108) processes the input speech through a plurality of states and the method further comprises modifying initial state probabilities associated with a path through multiple states in the match/search algorithm (108).

5.  The method of claim 1, wherein the match/search algorithm (108) utilizes multiple paths through acoustic models for the input speech and then method further comprises modifying the acoustic models based on then expected response.

6.  The method of claim 1, wherein the match/search algorithm (108) utilizes multiple paths through acoustic models for the input speech and the method further comprises modifying the insertion penalty associated with a given acoustic model.

7.  The method of claim 1, wherein processing of the input speech results in frames of the features of the input speech and the method further comprises utilizing multiple paths through acoustic models for the input speech feature frames to generate scores, and applying at least one of a bias or penalty per frame to the input speech to affect the scores of paths through the models.

8.  An apparatus for recognizing speech comprising:

    processing circuitry including a match/search algorithm (108) for performing speech recognition;
    the match/search algorithm (108) comprising a parameter being dynamically modifiable based on an expected response to be received as input speech to increase a confidence factor of a hypothesis for the expected response from a user over a confidence factor of a hypothesis for another possible response that can be received as input speech from the user and analyzed using the modified match/search algorithm (108), and further being operable for processing input speech from a user modified to generate a hypothesis and confidence factor for the input speech;
    wherein the parameter being dynamically modifiable includes an insertion penalty.

9.  The apparatus of claim 8, wherein the processing circuitry is further operable for comparing the hypothesis confidence factor to an acceptance threshold for accepting the hypothesis.

10. The apparatus of claim 8, wherein the match/search algorithm (108) processes the input speech through a plurality of states and is modifiable by modifying transition probabilities associated with transitions between multiple states in the match/search algorithm.

**11.** The apparatus of claim 8, wherein the match/search algorithm (108) processes the input speech through a plurality of states and is modifiable by modifying initial state probabilities associated with a path through multiple states in the match/search algorithm.

**12.** The apparatus of claim 8, wherein the match/search algorithm (108) utilizes multiple paths through acoustic models for the input speech and is modifiable by modifying the acoustic models based on the expected response.

**13.** The apparatus of claim 8, wherein the match/search algorithm (108) utilizes multiple paths through acoustic models for the input speech and is modifiable by modifying the insertion penalty associated with a given acoustic model.

**14.** The apparatus of claim 8, wherein the processing circuitry creates frames of the features of the input speech and the match/search algorithm (108) utilizes multiple paths through acoustic models for the input speech feature frames to generate scores, the algorithm applying at least one of a bias or penalty per frame to the input speech to affect the scores of paths through the model.

**Patentansprüche**

**1.** Computerimplementiertes Verfahren zur Erkennung von Sprache, umfassend die folgenden Schritte:

Bestimmen einer erwarteten Antwort in einem Sprachdialog, die als eingegebene Sprache von einem Benutzer empfangen werden soll;
Modifizieren eines Spracherkennungs-Übereinstimmungs-/Suchalgorithmus (108) basierend auf der bestimmten erwarteten Antwort, um einen Vertrauensfaktor einer Hypothese für die erwartete Antwort gegenüber einem Vertrauensfaktor einer Hypothese für eine andere mögliche Antwort zu verbessern, die als eingegebene Sprache vom Benutzer empfangen und unter Verwendung des modifizierten Übereinstimmungs-/Suchalgorithmus (108) analysiert werden kann; und
Verarbeiten der eingegebenen Sprache von einem Benutzer mit dem modifizierten Übereinstimmungs-/Suchalgorithmus (108), um eine Hypothese und einen Vertrauensfaktor für die eingegebene Sprache zu generieren;
wobei das Modifizieren des Spracherkennungs-Übereinstimmungs-/Suchalgorithmus (108) ein Modifizieren und/oder Anwenden des folgenden Parameters auf den Spracherkennungs-Übereinstimmungs-/Suchalgorithmus umfasst:

eine Einfügestrafe.

**2.** Verfahren nach Anspruch 1, ferner umfassend ein Vergleichen des Hypothesen-Vertrauensfaktors mit einer Akzeptanzschwelle zum Akzeptieren der Hypothese.

**3.** Verfahren nach Anspruch 1, wobei der Übereinstimmungs-/Suchalgorithmus (108) die eingegebene Sprache durch eine Mehrzahl von Zuständen verarbeitet, und das Verfahren ferner ein Modifizieren von Übergangswahrscheinlichkeiten umfasst, die mit Übergängen zwischen mehreren Zuständen im Übereinstimmungs-/Suchalgorithmus (108) assoziiert sind.

**4.** Verfahren nach Anspruch 1, wobei der Übereinstimmungs-/Suchalgorithmus (108) die eingegebene Sprache durch eine Mehrzahl von Zuständen verarbeitet, und das Verfahren ferner ein Modifizieren von Anfangszustandswahrscheinlichkeiten umfasst, die mit einem Pfad durch mehrere Zustände im Übereinstimmungs-/Suchalgorithmus (108) assoziiert sind.

**5.** Verfahren nach Anspruch 1, wobei der Übereinstimmungs-/Suchalgorithmus (108) mehrere Pfade durch akustische Modelle für die eingegebene Sprache verwendet, und das Verfahren dann ferner ein Modifizieren der akustischen Modelle basierend auf der dann erwarteten Antwort umfasst.

**6.** Verfahren nach Anspruch 1, wobei der Übereinstimmungs-/Suchalgorithmus (108) mehrere Pfade durch akustische Modelle für die eingegebene Sprache verwendet, und das Verfahren ferner ein Modifizieren der Einfügestrafe umfasst, die mit einem bestimmten akustischen Modell assoziiert ist.

**7.** Verfahren nach Anspruch 1, wobei das Verarbeiten der eingegebene Sprache zu Rahmen der Merkmale der eingegebenen Sprache führt, und das Verfahren ferner ein Verwenden mehrerer Pfade durch akustische Modelle für die Merkmalsrahmen der eingegebenen Sprache zum Generieren von Bewertungen und Anwenden mindestens eines von einem Bias oder einer Strafe pro Rahmen auf die eingegebene Sprache zum Beeinflussen der Bewertungen von Pfaden durch die Modelle umfasst.

**8.** Vorrichtung zum Erkennen von Sprache, umfassend:

Verarbeitungsschaltungsanordnung mit einem Übereinstimmungs-/Suchalgorithmus (108) zum Durchführen von Spracherkennung;
wobei der Übereinstimmungs-/Suchalgorithmus (108) einen Parameter umfasst, der basierend auf einer erwarteten Antwort, die als eingegebene Sprache empfangen werden soll, dynamisch modifiziert werden kann, um einen Vertrauensfaktor einer Hypothese für die erwartete Antwort von einem Benutzer gegenüber einem Vertrauensfaktor einer Hypothese für eine andere mögliche Antwort zu verbessern, die als eingegebene Sprache vom Benutzer empfangen und unter Verwendung des modifizierten Übereinstimmungs-/Suchalgorithmus (108) analysiert werden kann, und modifiziert ferner zum Verarbeiten der eingegebenen Sprache von einem Benutzer ausgelegt ist, um eine Hypothese und einen Vertrauensfaktor für die eingegebene Sprache zu generieren;
wobei der Parameter, der dynamisch modifiziert werden kann, eine Einfügestrafe ist.

9. Vorrichtung nach Anspruch 8, wobei die Verarbeitungsschaltungsanordnung ferner zum Vergleichen des Hypothesen-Vertrauensfaktors mit einer Akzeptanzschwelle zum Akzeptieren der Hypothese ausgelegt ist.

10. Vorrichtung nach Anspruch 8, wobei der Übereinstimmungs-/Suchalgorithmus (108) die eingegebene Sprache durch eine Mehrzahl von Zuständen verarbeitet und durch Modifizieren von Übergangswahrscheinlichkeiten, die mit Übergängen zwischen mehreren Zuständen im Übereinstimmungs-/Suchalgorithmus assoziiert sind, modifiziert werden kann.

11. Vorrichtung nach Anspruch 8, wobei der Übereinstimmungs-/Suchalgorithmus (108) die eingegebene Sprache durch eine Mehrzahl von Zuständen verarbeitet und durch Modifizieren von Anfangszustandswahrscheinlichkeiten, die mit einem Pfad durch mehrere Zustände im Übereinstimmungs-/Suchalgorithmus assoziiert sind, modifiziert werden kann.

12. Vorrichtung nach Anspruch 8, wobei der Übereinstimmungs-/Suchalgorithmus (108) mehrere Pfade durch akustische Modelle für die eingegebene Sprache verwendet und durch Modifizieren der akustischen Modelle basierend auf der erwarteten Antwort modifiziert werden kann.

13. Vorrichtung nach Anspruch 8, wobei der Übereinstimmungs-/Suchalgorithmus (108) mehrere Pfade durch akustische Modelle für die eingegebene Sprache verwendet und durch Modifizieren der Einfügestrafe, die mit einem bestimmten akustischen Modell assoziiert ist, modifiziert werden kann.

14. Vorrichtung nach Anspruch 8, wobei die Verarbeitungsschaltungsanordnung Rahmen der Merkmale der eingegebenen Sprache erzeugt, und der Übereinstimmungs-/Suchalgorithmus (108) mehrere Pfade durch akustische Modelle für die Merkmalsrahmen der eingegebenen Sprache verwendet, um Bewertungen zu generieren, wobei der Algorithmus mindestens eines von einem Bias oder einer Strafe pro Rahmen auf die eingegebene Sprache anwendet, um die Bewertungen von Pfaden durch die Modelle zu beeinflussen.

## Revendications

1. Procédé de reconnaissance de la parole mis en oeuvre par ordinateur comprenant les étapes suivantes :

dans un dialogue parlé, la détermination d'une réponse attendue devant être reçue comme parole d'entrée depuis un utilisateur ;
en fonction de la réponse attendue déterminée, la modification d'un algorithme de concordance/recherche de reconnaissance de la parole (108) pour augmenter un facteur de confiance d'une hypothèse relative à la réponse attendue par rapport à un facteur de confiance d'une hypothèse d'une autre réponse possible qui peut être reçue comme parole d'entrée depuis l'utilisateur et analysée à l'aide de l'algorithme de concordance/recherche modifié (108) ; et
le traitement de la parole d'entrée depuis un utilisateur avec l'algorithme de concordance/recherche modifié (100) pour générer une hypothèse et un facteur de confiance pour la parole d'entrée ;
dans lequel la modification de l'algorithme de concordance/recherche de reconnaissance de la parole (108) comprend la modification et/ou l'application du paramètre suivant à l'algorithme de concordance/recherche de reconnaissance de la parole : une pénalité d'insertion.

2. Procédé selon la revendication 1, comprenant en outre la comparaison du facteur de confiance d'hypothèse à un seuil d'acceptation pour accepter l'hypothèse.

3. Procédé selon la revendication 1, dans lequel l'algorithme de concordance/recherche (108) traite la parole d'entrée pour une pluralité d'états et le procédé comprenant en outre la modification de probabilités de transition associées à des transitions entre de multiples états dans l'algorithme de concordance/recherche (108).

4. Procédé selon la revendication 1, dans lequel l'algorithme de concordance/recherche (108) traite la parole d'entrée pour une pluralité d'états et le procédé comprenant en outre la modification de probabilités d'états initiales associées à un chemin par de multiples états dans l'algorithme de concordance/recherche (108).

5. Procédé selon la revendication 1, dans lequel l'algorithme de concordance/recherche (108) utilise de multiples chemins par des modèles acoustiques de la parole d'entrée puis le procédé comprenant en outre la modification des modèles acoustiques en fonction des réponses attendues alors.

6. Procédé selon la revendication 1, dans lequel l'algorithme de concordance/recherche (108) utilise de multiples chemins par des modèles acoustiques de la parole d'entrée et le procédé comprenant en outre la modification de la pénalité d'insertion associée à un modèle acoustique donné.

7. Procédé selon la revendication 1, dans lequel le traitement de la parole d'entrée produit des trames des caractéristiques de la parole d'entrée et le procédé comprenant en outre l'utilisation de multiples chemins par des modèles acoustiques des trames de caractéristiques de la parole d'entrée pour générer des scores, et l'application d'au moins l'un d'un biais ou d'une pénalité par trame à la parole d'entrée pour affecter les scores des chemins par les modèles.

8. Appareil de reconnaissance de la parole comprenant :

des circuits de traitement comportant un algorithme de concordance/recherche (108) pour exécuter une reconnaissance de la parole ; l'algorithme de concordance/recherche (100) comprenant un paramètre dynamiquement modifiable basé sur une réponse attendue devant être reçue comme parole d'entrée pour augmenter un facteur de confiance d'une hypothèse de la réponse attendue depuis un utilisateur par rapport à un facteur de confiance d'une hypothèse d'une autre réponse possible qui peut être reçue comme parole d'entrée depuis l'utilisateur et analysée à l'aide de l'algorithme de concordance/recherche modifié (108), et étant en outre exploitable pour traiter la parole d'entrée d'un utilisateur modifié pour générer une hypothèse et un facteur de confiance de la parole d'entrée ; dans lequel le paramètre dynamiquement modifiable comporte une pénalité d'insertion.

9. Appareil selon la revendication 8, dans lequel les circuits de traitement sont exploitables en outre pour comparer le facteur de confiance d'hypothèse à un seuil d'acceptation pour accepter l'hypothèse.

10. Appareil selon la revendication 8, dans lequel l'algorithme de concordance/recherche (108) traite la parole d'entrée pour une pluralité d'états et est modifiable en modifiant des probabilités de transition associées à des transitions entre de multiples états dans l'algorithme de concordance/recherche.

11. Appareil selon la revendication 8, dans lequel l'algorithme de concordance/recherche (108) traite la parole d'entrée pour une pluralité d'états et est modifiable en modifiant des probabilités d'états initiales associées à un chemin par de multiples états dans l'algorithme de concordance/recherche.

12. Appareil selon la revendication 8, dans lequel l'algorithme de concordance/recherche (108) utilise de multiples chemins par des modèles acoustiques de la parole d'entrée et est modifiable en modifiant les modèles acoustiques en fonction de la réponse attendue.

13. Appareil selon la revendication 8, dans lequel l'algorithme de concordance/recherche (108) utilise de multiples chemins par des modèles acoustiques de la parole d'entrée et est modifiable en modifiant la pénalité d'insertion associée à un modèle acoustique donné.

14. Appareil selon la revendication 8, dans lequel les circuits de traitement créent des trames des caractéristiques de la parole d'entrée et l'algorithme de concordance/recherche (108) utilise de multiples chemins par des modèles acoustiques des trames de caractéristiques de la parole d'entrée pour générer des scores, l'algorithme appliquant au moins l'un d'un biais ou d'une pénalité par trame à la parole d'entrée pour affecter les scores des chemins par les modèles.

FIG. 1

EP 2 309 489 B1

FIG. 2

FIG. 3

RECEIVE
SPEECH INPUT
FROM USER  *402*

↓

DIGITIZE AND PROCESS
THE RECEIVED SPEECH
TO GENERATE FEATURE
VECTORS  *404*

↓

COMPARE FEATURE VECTORS
ONLY AGAINST THE
EXPECTED RESPONSE AND
GENERATE ASSOCIATED
CONFIDENCE FACTOR  *406*

↓

ACCEPT
EXPECTED
RESPONSE  *410*  ← Y — CONFIDENCE
FACTOR >
ACCEPTANCE
THRESHOLD
?  *408*  — N → REJECT EXPECTED
RESPONSE, PROCEED
AS IN FIG. 1  *412*

## FIG. 4

RECEIVE
SPEECH INPUT
FROM USER  *502*

↓

DIGITIZE AND PROCESS THE
RECEIVED SPEECH TO
GENERATE FEATURE VECTORS  *504*

↓

MODIFY ACOUSTIC MODELS
AND SEARCH ALGORITHM
PARAMETERS BASED ON THE
EXPECTED RESPONSE  *506*

↓

PERFORM MODIFIED ACOUSTIC
SEARCH TO GENERATE HYPOTHESIS
AND ASSOCIATED CONFIDENCE
FACTOR  *508*

↓

ACCEPT HYPOTHESIS  *512*  ← Y — CONFIDENCE
FACTOR >
ACCEPTANCE
THRESHOLD
?  *510*  — N → REJECT HYPOTHESIS  *514*

## FIG. 5

FIG. 6

**EP 2 309 489 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1377000 A
- WO 9613030 A2
- US 4882757 A
- US 20030154075 A